# EUROPEAN PATENT APPLICATION

(11) **EP 3 503 622 A1**
(43) Date of publication of application: **26.06.2019**
(21) Application number: 17209071.4
(22) Date of filing: 20.12.2017
(51) Int. Cl.: H04W 36/14, H04W 48/18

(54) **NETWORK NODE FOR SERVICE DELIVERY**

(71) Applicant: Gemalto M2M GmbH, 81541 Munich (DE)
(72) Inventor: BREUER, Volker, 16727 BOETZOW (DE); WEHMEIER, Lars, 14612 FALKENSEE (DE)
(74) Representative: Grevin, Emmanuel

(57) **Abstract**

The present invention relates to a network node for a cellular network, the cellular network being configured to support at least two radio access technologies in an interworking relationship, wherein the network node is configured to support a first of said radio access technology to at least one user equipment camping on the network node, and to interwork with at least one network node of the second of said radio access technologies, upon reception of a request message from said user equipment, said request message comprising at least one service related criterion, the network node is configured to determine the service suitability based on said at least one service related criterion for the first and the second radio access technology, and if the service suitability of the second radio access technology is higher than the service suitability of the first radio access technology, redirect the user equipment to a second network node of the cellular network supporting said second radio access technology.

## Description

### FIELD OF THE INVENTION

The present invention relates to a network node of a cellular network. The invention also pertains to a method for said network node.

### BACKGROUND OF THE INVENTION

In the field of wireless cellular communication by now the user equipments were camping on the best suitable network node of the cellular network the user equipment is eligible for using, by taking into account the radio conditions, when operating in idle mode. This is usually happening in the same radio access technology, that is 2G (GSM), 3G (LTE), or 4G (LTE). The selected network node is in the majority of the cases also the servicing network node when changing into connected mode, as far as the radio conditions do not change. Other criteria, like congestion of the cell, might later lead to network triggered handover decisions, including InterRAT handover.

With the advent of new technologies like 5G (New Radio), a tighter cooperation between the cellular technologies within a cellular network are happening. 5G network nodes that are offering the full capacity in terms of data throughput for the respective frequency band will not be able to cover the cellular network area fully. As for increasing the data throughput new, higher frequency bands (3,4GHz or above 6GHz) will be used for offering the possibility of large user bandwidth supporting high throughput. But due to the high coupling loss because of the high base frequency such networks will not be used for coverage, definitely not in urban areas. The high coupling loss leads to small cells for 5G in high frequencies and large cells for 4G, deployed in lower frequencies.

User equipments consequently camp on a 4G cell during idle mode and are supposed to change to 5G when a data connection is about to be set up.

In the definition of the 5G technology standard this concept is also supported by the so called Non-Stand-Alone (NSA) architecture, and the 4G and 5G cells are operating in tight interworking mode.

However, a user equipment will not always request a service that requires a change to a 5G cell. Further, when camping on a 4G cell, it is not clear, if a change to a 5G cell is necessary and possible at all.

Hence, as the general concept has changed, the way how to handle user equipments for base nodes, resp. network nodes needs to be adapted compared to previous technologies as well.

It is therefore the goal of present invention to propose a solution for an improved handling of camping user equipments through tight interworking network nodes. Further alternative and advantageous solutions would, accordingly, be desirable in the art.

### SUMMARY OF THE INVENTION

For this it is according to a first aspect of the invention suggested a network node according to claim 1. It is further suggested according to a second aspect of the invention a method for a network node according to claim 8. According to a first aspect of the invention it is proposed a network node for a cellular network, the cellular network being configured to support at least two radio access technologies in an interworking relationship, wherein the network node is configured to support a first of said radio access technology to at least one user equipment camping on the network node, and to interwork with at least one network node of the second of said radio access technologies, upon reception of a request message from said user equipment, said request message comprising at least one service related criterion, the network node is configured to determine the service suitability based on said at least one service related criterion for the first and the second radio access technology, and if the service suitability of the second radio access technology is higher than the service suitability of the first radio access technology, redirect the user equipment to a second network node of the cellular network supporting said second radio access technology.

The network node according to the invention are the interface points between user equipments and cellular network. In dependency to the supported technology standard the network nodes are called base station (2G / GSM), nodeB (3G / UMTS), eNodeB (4G / LTE) or gNodeB (5G / New Radio).

The network node is in particular equipped with transmitting and receiving circuitry for exchanging signals with user equipments over the air interface according to at least one cellular technology standard.

The network node further comprises processing circuitry, that means in particular at least one processor for executing software programs implementing methods as the method and embodiments of the first aspect of the invention.

Further the network node is preferably equipped with communication means to other components of the cellular network it is part of. Such communication means are in particular wired connections. Such components of the cellular network, that are directly or indirectly reachable via said communication means, comprise in particular a home subscriber server (HSS), and components of the evolved packet core (EPC), like a Management Mobility Entity (MME), Serving Gateway (S-GW) etc.

Preferably the network node provides volatile and/or permanent memory, at least for holding software programs and/or preconfigured information, e.g. relating to system information item configurations.

Said user equipment is an user end device designated for communication according to one of the known wireless technology standards, like 4G, 5G or beyond with the cellular network. The user equipment is preferably equipped with the necessary circuitry for communicating over the air interface with the network nodes, resp. eNodeBs of the cellular network, in particular according to the second aspect of the invention. This comprises in particular transceiver circuitry, including receiving and transmitting capabilities. According to the circuitry also a separate structural design of transmitting circuitry and receiving circuitry is encompassed by the inventive user equipment. This in particular relates to a radio modem connected to a device.

The user equipment resp. its transceiver is configured to receive and decode signals from network nodes. The user equipment further maintains information relating to the type of user equipment it belongs to.

The network node according to the invention is operating in interworking relationship with another network node. The other network node is in particular supporting another radio access technology, in particular another technology standard, than the first network node. The interworking relationship comprises, that user equipments who wants to retrieve a service, like operating in an open connection, from the other network node, is camping on the first network node when operating in idle mode.

For the example of 5G it is for now foreseen that 5G network nodes (gNodeBs) are operated in so-called "tight interworking", as part of the Non Standalone (NSA) architecture, where the gNodeBs are basically delivering the 5G scheduling to user equipments, but in the backend the gNodeBs are connected to the 4G core network. For this concept the tight interworking between eNodeBs and gNodeBs is foreseen.

But as gNodeBs will presumably not cover the whole network area - especially not when being deployed above 3,4GHz or when being deployed in urban areas - this concept will also be applicable, when the full 5G network architecture is established. The deployment scenario can be considered similar to local area base stations in 3G which are used in hot-spots to increase throughput besides the 3G coverage frequency. The layout here encompasses 4G being responsible for coverage and additional high throughput provided by 5G being localized due to its high frequency in use.

Hence the inventive network node needs to be configured that user equipments are camping on them, but for being serviced a decision is to be made, if the user equipment continues to operate with this (e.g. the 4G) network node or with the other (e.g. the 5G) network node in interworking relationship, supporting a second radio access technology. Here comes the invention into play.

The inventive network node gets a request message from said user equipment camping on the network node, wherein the request message preferably comprises at least one service related criterion.

Preferably this request message is the service request message itself.

Such at least one service related criterion indicates to the network node information if and how an envisaged service is expected to be carried out. One example of service related criterion is the desired service itself. Another example is the desired latency of service fulfillment.

Based on such request and the retrieved at least one service related criterion the network node is supposed to determine service suitability, for the first and second radio access technology. This service suitability is in particular a value, that is based on a comparison of abilities of the network node, in particular thanks to the supported radio access technology, the deployment scenario of the radio technology, and the requested service.

The service suitability values how well-suited a radio access technology, resp. a network node supporting this radio access technology is to provide the requested service considering the received at least one service related criterion.

Typically some service requests can be handled by both the respective network node and the other network node the first network node is interworking with. Others are only handled by only one of both. For the latter case the service suitability of the network node which is not able to provide the service according to the requested service related criteria takes a very low value, like 0. This is e.g. the case for a request of a service of video streaming, in a provided bandwidth, and the network node is due to the supported radio access technology technically not able to provide such service in that service quality.

For being able to making decision, with which radio access technology the requested service shall be delivered, the service suitabilities of both radio access technologies are compared.

For that radio access technology with the higher service suitability the network node finally decides that the requested service is about to be operated by the respective network node of the identified better suitable radio access technology.

The inventive concept also comprises, that a service suitability value is determined, where a better suitability has a lower value. This is implementation specific and also encompassed by the invention.

The outcome of the comparison of service suitabilities leads to the effect, that the network node needs to decide, if itself will service the requesting user equipment or the other network node. In the first case the network node preferably simply confirms to the requesting user equipment that the service is possibly carried out, and enters into service delivery, e.g. by setting up a connection, a context, allocating resources etc.

For the second case the network node redirects the user equipment to the second network node, which supports the second radio access technology. This is to instruct the user equipment that before the service will be delivered a change to the other network node is necessary.

Preferably the redirect of the user equipment to the second network node comprises to carry out at least out of the group:
- a handover operation,
- a RRC connection reject including a redirection,
- indicating of a rejection and an instruction the user equipment to carry out a new attach request on a second network node,
- indicating to the second network node the so far exchanged information with the user equipment for reusing the so far executed attach procedure.

With this embodiment different variants of redirecting the user equipment to the other interworked network node are encompassed.

The first option is a simple handover operation, as it is known for previous technology standards. A handover comprises both instructions to the user equipment and interaction between the network node that is currently serving the user equipment and the target network node.

Typically a handover requires that the user equipment is operating in connected mode. For this sake this preferably includes, that the current network node establishes the connection for delivering the service, and afterwards initiates the handover operation. This option might also comprise that the service delivery is started with the first network node, before handing over to the network node with the better service suitability.

The second option relates to a RRC (radio resource control) connection reject. This is a known concept in UMTS and LTE, where a network node rejects a connection request from a user equipment by sending a RRC connection reject message. However the connection reject message is further accompanied by a redirection instruction. That means the user equipment is guided via the RRC connection reject message, and the user equipment follows the redirection instruction which indicates the other network node with the better service suitability. The information provided preferably includes at least one of frequency, technology and also resource related information for said service or general further information related to said second network being better suited to serve said requested service and the user equipment may directly start with a service request. Hence the user equipment has all means to request the service from the other network node.

A comparable method is suggested with the third option, whereas it is directed to the attach request. Here again a rejection is sent and an instruction sent to the user equipment to attach to the second network node. Which means the user equipment starts it service request including initial attach from scratch. As a fourth option it is suggested that the first network node instructs the second network node about the attached user equipment and all so far exchanged information. So the user equipment, which is instructed to change to the second network node may reuse the executed attach procedure, in order to carry on with the service delivery.

All mentioned options may be used or alone or in combination of at least two of them, in particular one option as fallback for another one.

The inventive concept is advantageous compared to a direct request of the user equipment indicating the desired radio access technology, as the user equipment for doing so needed to know about the capabilities of the involved network nodes, which may also be dynamic, like congestion related capabilities. Furthermore the suitability for a service may also depend on the used deployment scenario for a technology, i.e. when being in the center of a hotspot deployment, the user equipment just sees that network node at very high level and has no information whether other network node of said technology may appear once the first network node has dropped below a suitability threshold. For power saving reasons measurements are often stopped/suspended when being in very good propagation conditions like the well-known concept of Sinter/Sintrasearch in LTE. Further the user equipments might be too greedy, that means that for the sake of retrieving the "highest" radio access technology where available, it tries in each and every case to get to the higher radio access technology. But that might not be the best for the user equipments desired service and moreover lead on the cellular network side to an imbalance between the radio access technologies. Or as in NSA-architecture one of the radio access technologies is not campable as such and if a service starts, which does not require support from both networks in parallel, a decision needs to be made which of the involved radio access technologies is better suited to serve said particular service request.

Hence it is advantageous to let the network node where the user equipment is camping on decide based on the requested criteria, for the sake of both better serving the user equipment according to its needs and maintaining stability of the cellular network.

In the following, embodiments of the first aspect of the invention are described. Additional features elucidated in the context of different embodiments can be combined with each other to form further embodiments of the first aspect of present invention, as long as they are not explicitly described as forming mutually exclusive alternatives to each other.

Such at least one service related criterion comprises at least one out of:
- desired quality of service,
- desired latency,
- desired service,
- preferred service,
- envisaged data volume,
- estimated service duration,
- continuity of service,
- periodicity of service,
- mobility of the user equipment.

The at least one service related criterion provided by the user equipment can include a plurality of values. Depending upon the user equipment and service type such values are known and provided. When such values relate to known measurements or values of cellular technology standards, then it is preferable to use such values, instead of creating new measurements, calculations or the like.

The desired quality of service (QoS) is an individual requirement of a user equipment which relates to the bearers of evolved packet system. It typically is provided by a quality of service class identifier, characterized by priority packet delay and acceptable packet loss rate. Further it considers guaranteed bit rates resp. maximum bit rates provided by respective bearers.

The desired latency is a measure which indicates a time gap between request and answer from/to network node and user equipment. For time critical applications - like remote surgery or gaming - it is crucial to receive a confirmation response within a predefined time, and not just arbitrarily.

A major service related criterion is the desired service itself. It is highly likely that it is delivered with each service request. When a user equipment is only capable of one service, than it can however be omitted. With the desired service it is defined what service the user equipment desires to get delivered by the network, e.g. comprising a voice call, a simple TCP data connection, content streaming, etc. Typically the desired service is coded following a service type categorization.

Likewise the preferred service is provided as service related criterion. This is important for making the service suitability determination, when a different desired service than preferred service is requested. The preferred service means in this context, that the user equipment expects to carry out such preferred service frequently. Hence it is preferable that the user equipment gets delivered the desired service - if possible - on a radio access technology resp. network node, that is also capable of providing the preferred service, in order to avoid a frequent change between the involved network nodes.

More indirect criteria are the envisaged data volume and the estimated service duration relate to service with a known quantification. E.g. when it is known that a fixed size download is carried out, or a multimedia streaming is supposed to start, then the network node can derive the necessary capabilities of the network nodes resp. the radio access technologies. In particular a combination of both criteria, e.g. translated in data throughput per time unit, is also encompassed by this service criterion. With that not only the size of the download but also the expected time to retrieve the downloaded data is predetermined.

The service criteria of continuity of service and periodicity of service relate to repetitions of retrieving the desired service. The periodicity relates to regular repeating service request. This is in particular relevant for user equipment that only do this type of service. Therefore it is preferred to be operated on a network node without any change. Here also the mobility of the user equipment plays a role, as this indicates if the user equipment is operating stationary. That means, does it move around or not. In case it does not move around and it is using always the same service e.g. once a day, it presumably will remain on the network node that is best suited to provide the repeatedly requested service.

Service continuity however means that the service continues, which is for an long lasting open context useful. Even so service continuity can also be maintained across technologies, this often requires involvement of core network entities and causes enormous signaling load. Hence, choosing the best suited radio access technology right from the beginning is the more efficient method.

According to another preferred embodiment it is proposed that the at least one service related criterion relates to a user profile, wherein the user profile comprises a set of further service related criteria.

With this embodiment it is foreseen that the user equipment does not need to provide with each service request the at least one service related criterion, in particular when it is covering a couple of single criteria that need to be provided with each request. Preferably a user profile is defined that covers all or at least a part of those service related criteria, and only needs to be provided to the network node. Preferably a plurality of user equipments which all implement the same type of user equipment use the same user profile.

It is further foreseen that the user profile is even considered when the user equipment is requesting another service. Then the network node has knowledge about what the user equipment normally gets provided. E.g. for a voice centric device it is therefore advantageous if it requests for a data transmission to remain on a network node configured to support voice services.

Advantageously it is suggested that the network node considers criteria relating to the requesting user equipment ascertained in the cellular network for determining the service suitability for the radio access technology.

This is in particular true for the user profile, which could be held in the HSS or any other cellular network component. The network node will in any case upon reception of the request from the user equipment request these stored criteria and consequently take into account for the determination of the service suitability.

This embodiment is advantageous as it relieves the user equipment from sending its criteria resp. user profile indication with each service request message.

According to another preferred embodiment it is proposed that the network node is configured to send an availability indicator relating to the interworking capability with said second radio access technology to the user equipment. With this embodiment it is foreseen to inform the camping at least one user equipment about the possibility to be served by a network node of another (in particular higher) radio access network. This is in particular important for the user equipment to know that it preferably provides its service related criteria with a service request. If this indication is missing, then the delivery of the service related criteria would probably not lead to a redirection to a network node of another radio access network as the currently serving network node. Moreover it indicates the availability of another radio access network. E.g. for a user equipment with graphical user interface it is hence possible to indicate by an icon, that e.g. 4G and 5G are available, even when camping on a 4G network node. So this embodiment indicates the tight interworking relationship between the 4G and the 5G network node. So the network node may send an indication to its served user equipments about a radio access network, it does not belong to.

It is preferably foreseen that the availability indicator is provided via broadcast, e.g. as part of the system information transmissions. This embodiment also allows the user equipment when carrying out a reselection to take this availability indicator into account, and e.g. to prefer network nodes with interworking availability over those without.

Preferably the user equipment consists of a communication unit and a controlling unit, in particular a radio module with an application. The controlling unit controls - besides other functions - the communication unit and instructs it to carry out the necessary communication tasks.

Hence the communication unit receives the availability indication provided by the network node, and forwards such information to the controlling unit. This is preferably done by an asynchronous event, like a URC known from AT-interface.

The controlling unit preferably takes this availability indicator and may decide to show this information to its end users. Additionally or alternatively it takes this information to decide that certain services might be requested, that are available in case of a network node of the second radio access technology. The controlling unit therefore preferably enables/disables e.g. menu items or buttons or any other user interface handles that refer to launch said service, that is currently available resp. not available sufficiently good.

In a more advanced embodiment the user equipment resp. the communication unit may also indicate to the connected application which services are currently good/possible to execute and which should be executed later.

According to another preferred embodiment it is suggested that the network node is further configured to determine a second suitability value based on the received radio condition parameters concerning the signalling connection with the user equipment, and to take into account the second suitability value for the redirection decision.

In this embodiment as additional parameter for deciding about the network node which is supposed to deliver the requested service it is suggested the radio condition. It is known that for common mobility management the radio conditions are the decisive factor. In order to consider this criterion also in the context of the redirection decision it is suggested that the radio conditions are also evaluated besides the service suitability.

Preferably this is done by recognizing the radio conditions for the determination of the service suitability. In particular when the service suitability following the service related criteria mentioned above are quite tight between both network nodes, then the radio conditions may play the decisive factor. When only one of the network nodes is capable of communicating with the user equipment, then this network node would need to service the requesting user equipment, as long as it is capable of providing the requested service. Otherwise the user equipment is in a coverage hole for that requested service, and cannot be served at all.

The mentioned embodiments are in particular foreseen to be executed alone or in combination with at least one other embodiment of the inventive method.

According to a second aspect of the invention it is proposed a method to operate a network node being part of a cellular network, the cellular network being configured to support at least two radio access technologies in an interworking relationship, the network node being configured to support a first of said radio access technology to at least one user equipment camping on the network node, and to interwork with at least one network node of the second of said radio access technologies, the method comprises the step of:
- upon reception of a request message from said user equipment, said request message comprising at least one service related criterion, determining the service suitability based on said at least one service related criterion for the first and the second radio access technology,
and if the service suitability of the second radio access technology is higher than the service suitability of the first radio access technology, redirecting the user equipment to a second network node of the cellular network supporting said second radio access technology.

Principally, the second aspect of the invention shares the advantages of the first aspect of the invention.

As it is shown this invention advantageously solves the depicted problem and suggests a network node that handles user equipment service requests accordingly in order to relief user equipments from additional tasks for selection of the appropriate radio access technology for its tasks.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a situation for a plurality of network nodes in a cellular network of the type to which the present invention is applied as an embodiment;
- Fig. 2: shows the connections of the network nodes of the invention to other components of the cellular network;
- Fig. 3: represents a flow chart showing an exemplifying embodiment of the inventive method

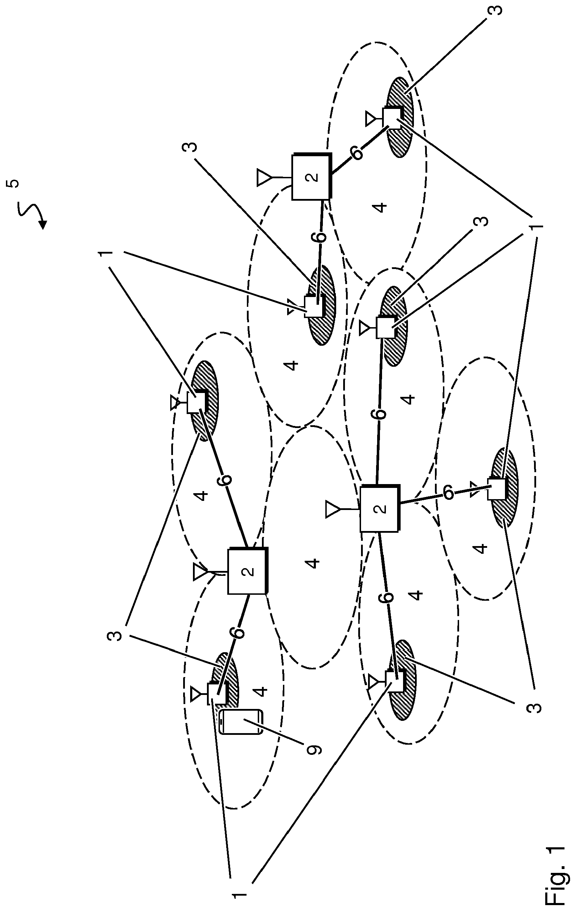

FIG. 1 schematically shows a network node 2 of a first radio access network and a network node 1 of the second radio access network, in operation as part of the cellular network 5. Basically the first network node 2 is one of the type to which the present invention is applied as an embodiment. It is shown for the example of an envisaged 5G / New radio radio access network the planned network architecture, wherein a network node 2 according to the invention facilitates for user equipments 9 configured to operate with said network node, to request services in particular provided by network node 1.

The 5G network node 1 is called gNodeB, the 4G network node 2 is called eNodeB.

As it can be seen, the cell areas 3 of the gNodeBs 1 cover in this exemplifying scenario only a small fraction of the cell areas 4 of the eNodeBs 2. The latter are supposed to cover preferably the whole area of a country or parts thereof, or at least populated areas where user equipments are to be expected. Hence, for a user equipment 9 operating in idle mode it is possible to camp one eNodeB in practically the whole covered region. However, this is not necessarily the case for the gNodeBs.

Due to this coverage situation, a user equipment 9 that wants to operate in the cellular network, is camping on the eNodeBs 2.

The eNodeBs and gNodeBs are operating in the so-called tight interworking relationship. This is applied to the non-standalone architecture of 5G, where it is expected that network nodes of another radio access technology of another technology standard, in particular 4G/UMTS, are available.

As it is shown they are communicatively connected by connection lines 6. Further the shown network nodes are connected to other components of the cellular network 5.

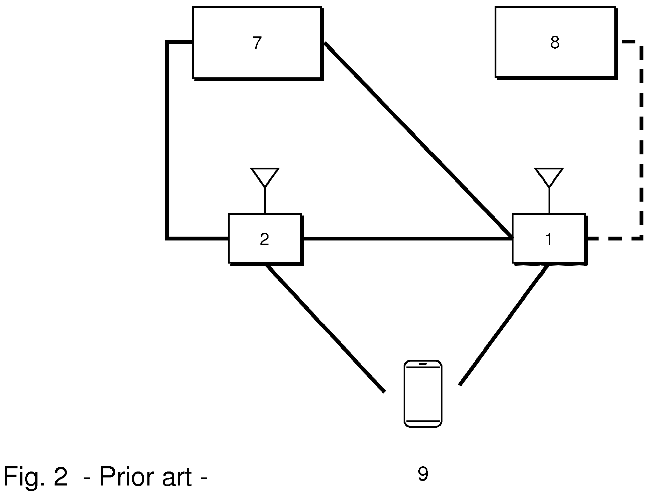

This is shown in Fig. 2, which represents the prior art. Here it is shown the envisaged architecture of the non-standalone architecture for 5G. The user equipment 9 is here configured to operate with the network nodes 1 and 2, wherein network node 1 supports the higher technology standard, here 5G, and network node 2 supports the lower technology standard, here 4G.

As it can be seen, the 5G network nodes 1 have presently no 5G network architecture, but use the network architecture of the 4G network, like an EPC 7. For future situation where 5G network components 8 are available, another type of intra RAT communication is necessary, but the general goal of the invention still is to be achieved.

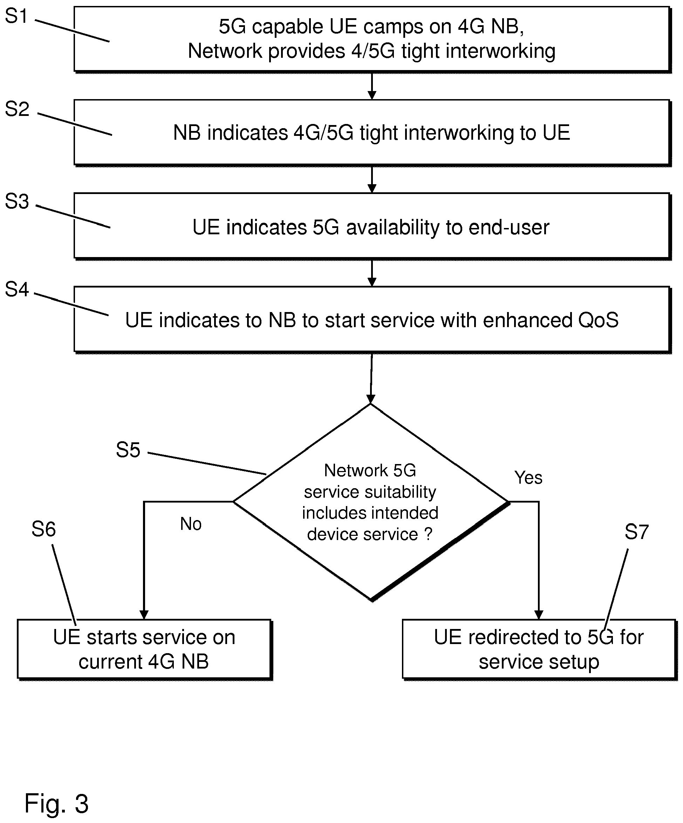

Hence it is proposed an exemplifying process flow as shown in Fig. 3 for achieving that goal. The process flow assumes in step S1 the situation of a 5G capable user equipment which camps on a 4G network node 2 (eNodeB). The eNodeB 2 is operating in tight interworking relationship to at least one 5G network node 1 (gNodeB).

During the camping relationship the network node 2 indicates in step S2, in particular by means of a broadcast, to the camping user equipment that it is operating in tight interworking with 5G network nodes. This allows the user equipments to know that certain services, in particular those preferably delivered by 5G network nodes, may be available. As this is of interest for the end-user of a user equipment, e.g. a smartphone or a machine-type-communication device, this is preferably also indicated to an end-user in step S3.

Preferably the user equipment considers the availability indicator for requesting services that are only provided by a 5G node, like a low latency service.

In step S4 the user equipment sends a service request to the network node indicating a certain quality of service (QoS) requirement. Such QoS requirement incorporates information characterizing the requested service, in particular in terms of reliability.

The network node receives this request from the user equipment and decides in step S5 about how to handle the request. For this the network node determines the service suitability of the 5G radio access network. If the 5G network is better suited to deliver the requested service, than the 4G radio access network, then it is preferred to deliver the service by means of the interworked 5G network node.

Preferably also radio conditions are taken into consideration for this decision step. This basically means that the user equipment is located in or at least near of the cell area 3 of a 5G network node. About this the network node 2 is informed by measurements of received radio conditions at the user equipment, preferably delivered through measurement reports. If these measurement reports indicate that the user equipment is able to receive and decode signals from the 5G network node, then the 5G network node might take into consideration for the decision step S5.

In response to the decision the user equipment is instructed how to start the requested service.

In case the service suitability of the 5G radio access network is higher than that of the current 4G radio access network, and a decodable 5G network node is available for the user equipment, then the process flow branches to step S7. This incorporates a redirection to the tightly interworked 5G network node. With that the user equipment is in particular handed over to the respective 5G network node. When this handover took part the service is setup.

In all other cases the process flow branches to step S6 and the user equipment can start its service on the current 4G network node. The user equipment can in particular decide if it will start its service at all, when no access to a 5G network node is recommended.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Network node for a cellular network, the cellular network being configured to support at least two radio access technologies in an interworking relationship,
wherein the network node is configured to support a first of said radio access technology to at least one user equipment camping on the network node, and to interwork with at least one network node of the second of said radio access technologies,
upon reception of a request message from said user equipment, said request message comprising at least one service related criterion,
the network node is configured to determine the service suitability based on said at least one service related criterion for the first and the second radio access technology,
and if the service suitability of the second radio access technology is higher than the service suitability of the first radio access technology, redirect the user equipment to a second network node of the cellular network supporting said second radio access technology.

2. Network node according to claim 1,
wherein the redirect of the user equipment to the second network node comprises to carry out at least out of the group:
- a handover operation,
- a RRC connection reject including a redirection,
- indicating of a rejection and an instruction the user equipment to carry out a new attach request on a second network node,
- indicating to the second network node the so far exchanged information with the user equipment for reusing the so far executed attach procedure.

3. Network node according to claim 1 or 2,
wherein the at least one service related criterion comprises at least one out of:
- desired quality of service,
- desired latency,
- desired service,
- preferred service,
- envisaged data volume,
- estimated service duration,
- continuity of service,
- periodicity of service,
- mobility of the user equipment.

4. Network node according to claim 1 or 3,
wherein the at least one service related criterion relates to a user profile, wherein the user profile comprises a set of further service related criteria.

5. Network node according to at least one of the previous claims,
further configured to consider criteria relating to the requesting user equipment ascertained in the cellular network for determining the service suitability for the radio access technology.

6. Network node according to at least one of the previous claims,
further configured to send an availability indicator relating to the interworking capability with said second radio access technology to the user equipment.

7. Network node according to at least one of the previous claims,
further configured to determine a second suitability value based on the received radio condition parameters concerning the signalling connection with the user equipment,
and to take into account the second suitability value for the redirection decision.

8. Method to operate a network node being part of a cellular network, the cellular network being configured to support at least two radio access technologies in an interworking relationship,
the network node being configured to support a first of said radio access technology to at least one user equipment camping on the network node, and to interwork with at least one network node of the second of said radio access technologies,
the method comprises the step of:
- upon reception of a request message from said user equipment, said request message comprising at least one service related criterion, determining the service suitability based on said at least one service related criterion for the first and the second radio access technology,
and if the service suitability of the second radio access technology is higher than the service suitability of the first radio access technology, redirecting the user equipment to a second network node of the cellular network supporting said second radio access technology.

9. Method according to claim 8,
wherein the redirecting of the user equipment to the second network node comprises carrying out at least out of the group of:
- a handover operation,
- a RRC reject including a redirection,
- indicating of a rejection and an instruction the user equipment to carry out a new attach request on a second network node,
- indicating to the second network node the so far exchanged information with the user equipment for reusing the so far executed attach procedure.

10. Method according to at least one of the claims 8 or 9,
wherein the at least one service related criterion comprises at least one out of:
- desired quality of service,
- desired latency,
- desired service,
- preferred service,
- envisaged data volume,
- estimated service duration,
- continuity of service,
- periodicity of service,
- mobility of the user equipment.

11. Method according to at least one of the claims 8 to 10,
wherein the at least one service related criterion relates to a user profile, wherein the user profile comprises a set of further service related criteria.

12. Method according to at least one of the claims 8 to 11,
further comprising the step of considering criteria relating to the requesting user equipment ascertained in the cellular network for determining the service suitability for the radio access technology.

13. Method according to at least one of the claims 8 to 12,
further comprising the step of sending an availability indicator relating to the interworking capability with said second radio access technology to the user equipment.

14. Method according to at least one of the claims 8 to 13,
further comprising the step of determining a second suitability value based on the received radio condition parameters concerning the signalling connection with the user equipment,
and taking into account the second suitability value for the redirection decision.
